# EUROPEAN PATENT SPECIFICATION

(11) **EP 2 226 204 B1**
(45) Date of publication and mention of the grant of the patent: **27.06.2012**
(21) Application number: 08851027.6
(22) Date of filing: 13.11.2008
(51) Int. Cl.: B60C 9/20, B60C 9/22, B60C 9/18

(54) **PNEUMATIC TIRE FOR MOTOR-BICYCLE**
LUFTREIFEN FÜR EIN MOTORRAD
PNEU POUR MOTOCYCLETTE

(30) Priority: 14.11.2007 JP 2007295470
(43) Date of publication of application: 08.09.2010
(73) Proprietor: Bridgestone Corporation, Tokyo 104-8340 (JP)
(72) Inventor: KATAYAMA, Shinsaku, Kodaira-shi Tokyo 187-0031 (JP); ISHIYAMA, Makoto, Kodaira-shi Tokyo 187-0031 (JP)
(74) Representative: Oxley, Robin John George
(86) International application number: PCT/JP2008/070665
(87) International publication number: WO 2009/063935

(56) References cited:
- WO-A1-2008/075737
- JP-A- 3 128 703
- JP-A- 5 330 309
- JP-A- 6 024 207
- JP-A- 6 040 210
- JP-A- 6 143 923
- JP-A- 10 086 608
- JP-A- 2004 352 010
- JP-A- 2007 038 831
- JP-A- 2007 283 802
- JP-A- 2007 290 413
- JP-A- 2008 087 627
- JP-T- 2005 535 504

## Description

### TECHNICAL FIELD

The present invention relates to a pneumatic tire for motorcycles (hereinafter also referred to as simply "tire"), more particularly, a pneumatic tire for motorcycles whose spiral belt layer is improved.

### BACKGROUND ART

Since, in a high performance tire for motorcycles, the rotation speed of the tire becomes high, the tire is largely affected by the centrifugal force, leading to outward expansion of the tread portion of the tire and thereby to a reduced steering stability in some cases. Therefore, a tire structure has been developed wherein a reinforcement member comprising an organic fiber or steel (spiral member) is wound around the tread portion of a tire such that it is almost in parallel with the equatorial plane of the tire.

Examples of the spiral member used in this spiral belt layer include nylon fibers, aromatic polyamides (product name: Kevlar) and steels. Among these, recent interest has focused on aromatic polyamides and steels since they do not elongate and are capable of reducing expansion of the tread portion even at a high temperature. In cases where such a spiral member is wound around the crown portion of a tire, the so called "hoop" effect (an effect which prevents, by constraining the crown portion of a tire with a spiral member, expansion of a tire due to the centrifugal force even when the tire rotates at a high speed, thereby allowing a high steering stability and durability to be exerted) can be enhanced, so that many technologies related to improvement of these spiral members have been proposed so far (e.g., Patent Documents 1 to 5).

Tires wound by these spiral members are known to be excellent in the steering stability at a high speed and exhibit a very high traction. However, in terms of the turning performance during leaning largely of a vehicle (motorbike), winding a spiral member does not cause drastic improvement in the steering stability. Therefore, consumers, and riders who participate in races sometimes demand for improvement of the grip performance during leaning largely of a motorbike.

Further, it is known that durability at a high speed is especially improved depending on the elastic modulus of the spiral member. In general, in cases where a member having a high modulus of elasticity is used for the spiral belt, expansion of the tread portion of a tire by the centrifugal force can be suppressed, so that durability at a high speed is improved. In the case of a tire for motorcycles, since the central region of the tread used at a high speed is subjected to a large centrifugal force, it is effective to employ a spiral member having a high modulus of elasticity to prevent the expansion due to the centrifugal force. On the other hand, since the region at the both edges of the tread which contacts the ground when the motorbike is largely leaned is less frequently used at a high speed than the central portion, a spiral belt having a lower modulus of elasticity than that of the central portion is used therefor in some cases to put priority on stability of contacting with the ground. Thus, in a tire, different performances are demanded between the central region and the region at the edges, so that there are also patent applications employing spiral members having different moduli of elasticity among positions where they are arranged.

Examples of technologies for achieving different moduli of elasticity of spiral members among positions of their arrangement include Patent Documents 6 and 7, and Patent Document 6 discloses a tire for motorcycles whose belt ply has a larger initial modulus of elasticity in the central region (M) than in the shoulder regions (S), wherein the central region (M) is located inside the points (P) that are at a distance, from the equatorial plane of the tire, in the direction of the axis of the tire, not less than 0.25 times and not more than 0.35 times as large as the tread width (TW) which is the distance between the outside edges of the tread portion in the direction of the axis of the tire, and the shoulder regions (S) are the regions outside the above-described (P).
Patent Document 1: Japanese Unexamined Patent Application Publication No. 2004-067059
Patent Document 2: Japanese Unexamined Patent Application Publication No. 2004-067058
Patent Document 3: Japanese Unexamined Patent Application Publication No. 2003-011614
Patent Document 4: Japanese Unexamined Patent Application Publication No. 2002-316512
Patent Document 5: Japanese Unexamined Patent Application Publication No. 09-226319
Patent Document 6: Japanese Unexamined Patent Application Publication No. 03-128703
Patent Document 7: European Patent Application Publication No. 0978396

Attention is drawn to the disclosure of JP 2007-290413, which is considered as the closest prior art document.

### DISCLOSURE OF THE INVENTION

### PROBLEMS TO BE SOLVED BY THE INVENTION

Since the body of a motorcycle is leaned to make turns, in a pneumatic tire for motorcycles, the area on the tread portion of the tire which contacts the ground is different between the case of proceeding straight ahead and the case of turning. That is, characteristically, the center portion of the tread portion is used when a motorcycle is proceeding straight ahead, and an edge portion of the tread portion is used when it turns. Therefore, the shape of the tire is much rounder than a tire for a passenger car. Due to this rounded crown shape (the shape of the tread portion of a tire is called crown shape), a pneumatic tire for motorcycles has the following unique characteristics especially during turning.

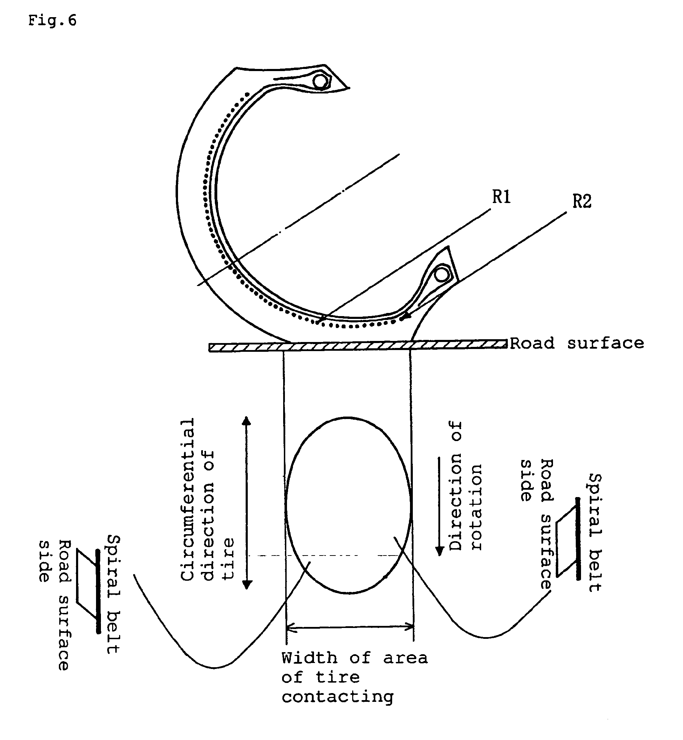

Concerning the turning performance of a tire of a motorcycle required when the body of the motorcycle is largely leaned, a grip is generated by contacting one of,the edges of the tread of the tire with the road surface. When a motorcycle turns with its body largely leaned, the tire contacts the ground as shown in Fig. 6. The contact shape observed in this case will be discussed. As shown in the figure, the state of deformation of the tread is different in the contact shape between the area near the center and the area near a tread edge. In terms of deformation of the tread in the rotation direction of a tire (also referred to as the circumferential direction of a tire or front-back direction of a tire), deformation near the center of the tire is in a driving state and deformation near a tread edge of the tire is in a braking state.

As used herein, the term "driving state" means a sheared state wherein, assuming a tire sliced along the equatorial direction, the tread is deformed such that the lower surface of the tread (surface contacting a skeletal member in the tire) is sheared backwardly in the direction of travel of the tire and the tread surface contacting the road surface is deformed forwardly in the direction of travel of the tire, which deformations occur when a driving force has just been applied to the tire. On the other hand, the term "braking state" has the opposite meaning to the driving state, and means a sheared state wherein the tread is deformed such that the inner side (belt) of the tire is sheared forwardly and the tread surface contacting the road surface is deformed backwardly, which corresponds to the movement of the tire during braking.

As shown in Fig. 6, when a motorcycle turns while being leaned at a large angle such as a camber angle (CA) of 45°, even in cases where the tire is rotating with neither a driving force nor a braking force applied to the tire, the contact region near the tread center is in a driving state and the contact region near a tread edge is in a braking state. This is due to the difference in the radius of the belt portion of the tire (radius difference). Since a tire for motorcycles has a largely-rounded crown portion, the distance from the rotation axis to the belt is largely different between the tread center portion and tread edge portions. In the case shown in Fig. 6, the radius R1 at the position near the center in the contact shape is obviously larger than the radius R2 at the position near the tread edge portion in the contact shape. Because the angular velocity of a rotating tire is the same, the velocity at the belt portion (which means the velocity of the tire in the circumferential direction along the road surface, when the tire contacts a road surface; which is a product of the belt radius and the angular velocity of the tire) is higher in the case of R1 wherein the radius is larger. Although the tread surface of the tire is not sheared in the longitudinal direction at the moment of the contact with the road surface, it undergoes shear deformation in the longitudinal direction when it proceeds along with the rotation of the tire while contacting the road surface followed by becoming apart from the road surface. In this case, the area of the tread near the tire center at which the velocity of the belt is high undergoes shear deformation of a driving state, while the tread edge portion of the tire at which the velocity of the belt is low undergoes breaking deformation. This is the pattern of deformation of a tread in the longitudinal direction.

Since such ineffective deformations during turning cause opposite shear deformations on the tread including those in the forward and backward directions, unnecessary motions are included to cause inefficiency in the grip ability of the tire during turning. Ideally, if all the deformations of the tread contacting the ground exhibit the same motion, the grip ability is highest, but there are cases where the above-described ineffective deformations occur and the grip ability is not generated depending on the place where the tread contacts the ground. For example, when a motorcycle is accelerated with its tires being leaned, a driving force is applied to each tire, and in this case, the area of the tread near the center which is already in the driving state immediately exerts a driving grip when the driving force is applied to the tire, but the area at the tread edge which is already in the breaking state cannot easily contribute to the driving force because it needs to be once recovered from the breaking deformation into the neutral state, followed by shifting to the deformation in the driving side. A large traction force is required for a tread edge to be in the driving state, and acceleration to apply a driving force to the tire for applying such a traction force easily causes slippage of the area of the tread near the tire center which is already in the driving state, leading to the state of spinning without gripping.

Thus, the present invention aims to solve the above-described problems specific to motorcycles and to provide a pneumatic tire for motorcycles which can enhance the traction performance especially during sharp cornering by largely leaning a vehicle, without diminishing other performances.

### MEANS FOR SOLVING THE PROBLEMS

The present inventors intensively studied to solve the above described problems and, as a result, discovered the facts below.

That is, in relation to the above-described problems, it is considered that a traction force can be exerted even on the tread edge portions if the tread deformation in the tire shoulder portions (tread edge portions) which are originally in the breaking side is made to be in the driving side as much as possible. One solution to achieve this is to accelerate the velocity of the belt in the tread edge portions. However, as mentioned above, the velocity of the belt depends on the belt radius, and a belt having a large radius is inappropriate for tires for motorcycles. In view of this, it is considered that as for the tread edge portions, the velocity of the belt can be increased by enabling the belt to easily extend in the equatorial direction after contacting the ground. That is, during turning at a large CA, if the center-side half of the contact shape has a structure with which the belt does not extend in the equatorial direction and the tread edge-side half of the contact shape has a structure with which the belt extends in the equatorial direction, the belt in the tread side extends after contacting the ground and hence the velocity of the belt in the tread edge side increases, thereby reducing the breaking deformation in the tread edge side. As a result, the traction performance at a large CA (acceleration after turning by leaning the motorbike largely) is enhanced.

Usually, in a conventional tire for motorcycles, a spiral belt layer is wound around the entire area of the tread. In such a tire, the belt in the shoulder portions of the tread cannot be extended in the equatorial direction. In view of this, if the spiral belt layer is arranged only in the center side without being wound in the regions of the tread edges, the traction grip is enhanced at a large CA, that is, during turning at a large camber angle because the velocity of the belt in the tread edge increases. Further, increase in the velocity of the belt in the tread shoulder portion at a large CA means that the velocity of the belt in the tread shoulder becomes close to the velocity of the belt in the tread center side, thereby suppressing the ineffective motions of the tread contacting the ground. That is, the tread which originally had shears in the opposite directions is made to have shears in the same direction, so that the ineffective motions are eliminated and occurrence of partial abrasion can be reduced. Further, since the spiral belt layer is arranged in the tread center portion, expansion of the tire due to the centrifugal force during high speed driving (driving at a high speed means that the motorbike is standing upright) can be suppressed, and as a result, the steering stability at a high speed can be maintained to the same extent as in a tire having a full-width spiral belt layer.

In view of this, the present inventors further studied to discover that the above problem can be solved by not arranging the spiral belt layer in the shoulder portions and splitting the spiral belt layer into three in the transverse direction, employing reinforcement materials having different tensile elastic moduli between the region at the both edges and the central region of the spiral belt layer, thereby completing the present invention.

That is, the present invention is related to a pneumatic tire for motorcycles having a tread portion formed in a circular shape, wherein the tread portion has a crown portion which has a spiral belt layer in its inside in the radial direction of the tire, the spiral belt layer having an angle of 0° to 5° with respect to the circumferential direction of the tire and an arrangement width 0.5 to 0.8 times as large as the tread width, wherein the spiral belt layer is split into three in the transverse direction and the tensile elastic modulus of the cord constituting the region at the both edges of the spiral belt layer split into three is lower than that of the cord constituting the central region.

In the tire of the present invention, it is preferred that the central region of the spiral belt layer have an aromatic polyamide cord layer and the region at the both edges of the spiral belt layer have a nylon cord layer or a polyethylene naphthalate cord layer. Further, it is preferred that the central region of the spiral belt layer has a steel cord layer and the region at the both edges of the spiral belt layer have an organic fiber cord layer.

In the tire of the present invention, it is preferred that a belt intersecting layer comprising an organic fiber be arranged adjacent to the spiral belt layer, which belt intersecting layer is wider than the spiral belt layer and has an angle of not less than 30° and less than 85° with respect to the circumferential direction of the tire. Further, the width of the region at each of the both edges of the spiral belt layer is preferably 0.10 to 0.25 times as large as the tread width.

Further, in the present invention, a belt reinforcement layer comprising an organic fiber cord having an angle of 85° to 90° with respect to the circumferential direction of the tire is preferably arranged between the tread layer and the spiral belt layer such that the belt reinforcement layer is adjacent to the tread layer, in a width of not less than 90% and not more than 110% with respect to the tread width, and a shock absorbing rubber layer having a thickness of 0.3 to 1.5 mm is also preferably arranged inside the belt reinforcement layer in the radial direction of the tire such that the shock absorbing rubber layer is adjacent to the belt reinforcement layer.

### EFFECT OF THE INVENTION

According to the present invention, by providing the above constitution, a high performance pneumatic tire for motorcycles can be realized which can improve the traction performance especially during sharp cornering by largely leaning a vehicle (motorbike) followed by acceleration, and the stability during leaning of a vehicle in addition to enhancing the steering stability at high speed. Further, according to the present invention, an effect to enhance the anti-abrasion properties of the tire shoulder portion can also be obtained.

### BRIEF DESCRIPTION OF THE DRAWINGS

Figure 1 is a cross-sectional view in the transverse direction showing a pneumatic tire for motorcycles according to one preferred example of the present invention.
Figure 2 is a cross-sectional view in the transverse direction showing a pneumatic tire for motorcycles according to another preferred example of the present invention.
Figure 3 is a cross-sectional view in the transverse direction showing a pneumatic tire for motorcycles according to still another preferred example of the present invention.
Figure 4 is a cross-sectional view in the transverse direction showing a pneumatic tire for motorcycles according to still another preferred example of the present invention.
Figure 5 is a cross-sectional view in the transverse direction showing a pneumatic tire for motorcycles according to a conventional example.
Figure 6 is a cross-sectional view showing a tire for a motorcycle immediately under the load during turning at a large CA (CA of 50°).
Figure 7 is a graph showing a friction ellipse showing the relationship between Fx and Fy.

### DESCRIPTION OF SYMBOLS

- 1: bead core
- 2: carcass
- 3: spiral belt layer (3A region at the both edges, 3B central region)
- 4: belt intersecting layer
- 5: belt reinforcement layer
- 6: shock absorbing rubber layer
- 11: tread portion
- 12: side wall portion
- 13: bead portion

### BEST MODE FOR CARRYING OUT THE INVENTION

Preferred embodiments of the present invention will be described concretely referring to diagrams.

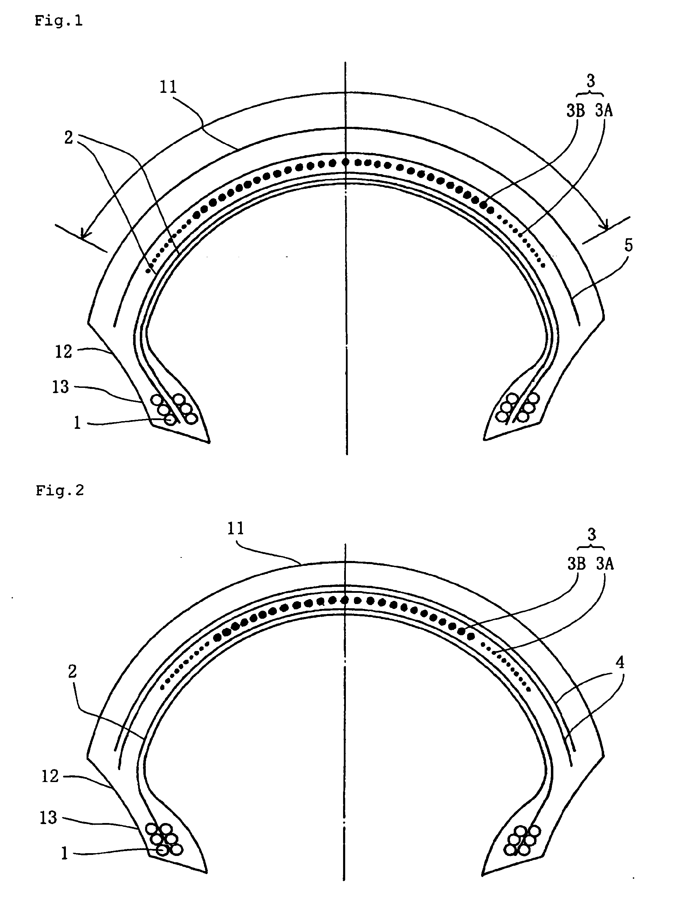

Fig. 1 shows a cross-sectional view of a pneumatic tire for motorcycles, in the transverse direction, of one preferred example of the present invention. As shown in the figure, the pneumatic tire for motorcycles of the present invention comprises a tread portion 11 formed in a circular shape, a pair of side wall portions 12 arranged from its both edges to their inside in the radial direction of the tire, and bead portions 13 lying inside the side wall portions 12 in the radial direction of the tire, in addition to at least one, two in the example shown in the figure, carcass(es) 2 extending between a pair of bead cores (comprising bead wires 1, in the example shown in the figure) embedded in each bead portion 13, which carcass(es) reinforce(s) these respective portions.

As shown in the figure, in the tire of the present invention, a spiral belt layer 3 having an angle of 0 to 5° with respect to the circumferential direction of the tire and an arrangement width 0.5 to 0.8 times as large as the tread width is arranged in the radial direction of the tire inside the crown portion of the tread portion 11. Here, the full width corresponds to the distance on the surface of the curve from one tread edge to the other tread edge along the surface of the tire. The above setting of the width is based on the portion which contacts the ground at a CA of about 50° when the motorbike is leaned to the maximum extent and the portion which contacts the ground when the motorbike is slightly raised.

When the motorbike is turned at a CA of 50°, only the area of the tread shoulder portion having a width 0.2 to 0.25 times as large as the full width of the tread is contacting the ground (see Fig. 6). This corresponds to about one quarter of the full width. As mentioned above, it is demanded that a spiral belt be wound around the tread center portion to prevent extension of the skeletal member on the area contacting the ground in the circumferential direction at a large CA, while the spiral belt be not wound around the tread edge sides to make the skeletal member to positively extend in the equatorial direction at a large CA. A half of the area contacting the ground at a large CA has a width 0.1 times as large as the tread width, and in cases where a spiral belt is not wound around the area having this width, the area having a width 0.1 times as large as the tread width in each of the both edge portions lacks the spiral belt, so that the full width of the spiral belt is 0.8 times as large as the tread width.

The above-described upper limit is an ideal value for the case at contacting the ground where the motorbike is leaned to the maximum extent. However, acceleration of a motorbike is characterized by the process wherein, after the motorbike is leaned to the maximum extent, acceleration is begun, followed by raising the body gradually, that is, the portion contacting the ground gradually moves to the center side. Further, the maximum acceleration of a motorbike occurs at a CA within the range of 30° to 45° rather than at a CA of 50° at which the motorbike is leaned to the maximum extent. Considering that the traction performance should be highest at this time, the spiral width is preferably smaller than the above-described width 0.8 times as large as the tread width. Thus, the lower limit of the spiral width was set to 0.5 times as large as the tread width. In cases where the spiral width is 0.5 times as large as the tread width, the spiral edge is expected to be positioned at the center of the portion in the transverse direction contacting the ground at a CA of 30° to 40°. In cases where the spiral width is smaller than 0.5 times as large as the tread width, the position shifts from the center of the contact shape in the transverse direction at a CA of 30° to 40°, which is not preferred. This means that the spiral width is too small.

Thus, when the arrangement width of the spiral belt layer 3 is at the upper limit, that is, 0.8 times as large as the tread width, the edge portion of the spiral belt can be positioned at the center of the contact shape at a CA of about 50° at which the motorbike is leaned to the maximum extent, and the grip enhancement effect is improved during the initial acceleration. Further, the effect is higher at a low-speed corner at which the motorbike is leaned largely (a motorbike can be largely leaned at a low-speed corner). On the other hand, when the arrangement width of the spiral belt layer 3 is at the lower limit, that is, 0.5 times as large as the tread width, the spiral edge portion can be positioned at the center of the contact shape when the motorbike is slightly raised (at a CA of 30° to 40°), so that the grip enhancement effect can be exerted from the initial acceleration until the middle phase of acceleration when the body was slightly raised. Further, the grip enhancement effect is exerted at a high-speed corner at which the motorbike is not so largely leaned.

Further, in the present invention, the spiral belt layer 3 is split into three in the transverse direction, and among these, the tensile elastic modulus of the cord constituting the region 3A at the both edges of the spiral belt layer 3 is lower than the tensile elastic modulus of the cord constituting the central region 3B of the spiral belt layer 3. In cases where the arrangement width of the spiral belt is small as in the present invention, the area having no spiral belt (where the shearing rigidity of the belt decreases) is suddenly made to contact the ground when the body is being leaned, unlike in cases where the spiral belt covers the full width of the tread. Therefore, a sudden change in grip occurs when the body was leaned to the maximum extent, so that the rider feels a step and cannot further lean the body, which is problematic. To reduce such a sharp rigidity step, a low-elasticity cord is used for the region 3A at the both edges of the spiral belt layer 3. Since, by this, the change in grip occurs smoothly, the rider can lean the body without uncomfortable feeling. By reducing the rigidity step, the shear strain applied to the edge of the spiral belt can also be reduced, so that breakage accident which is likely to occur in the edges can be prevented. In the present invention, comparison of the tensile elastic modulus of the cord (hereinafter also referred to as "elastic modulus") is carried out based on the values measured under the same conditions, for example, at the same temperature.

In the present invention, examples of the method to achieve different tensile elastic moduli between the region 3A at the both edges and the central region 3B of the spiral belt layer 3 include those wherein different kinds of cords are employed for the respective regions. For example, there is a method wherein an aromatic polyamide cord layer is employed for the central region 3B of the spiral belt layer 3 and a nylon cord layer or a polyethylene naphthalate (hereinafter referred to as "PEN") cord layer is employed for the region 3A at the both edges of the spiral belt layer 3.

Another example is a method wherein a steel cord layer is employed for the central region 3B of the spiral belt layer 3 and an organic fiber cord layer is employed for the region 3A at the both edges of the spiral belt layer 3. Examples of the organic fiber which may be used include aromatic polyamides (e.g., product name: Kevlar), PEN and nylons.

Further, in the present invention, the width of the central region 3B of the spiral belt layer is preferably 0.10 to 0.25 times as large as the tread width. In the case of a tire for motorcycles, since the region 3A at the both edges of the tread which contacts the ground when the motorbike is largely leaned is used less frequently at a high speed than the central region 3B, it is important to enhance the stability of contacting with the ground by reducing the width of the spiral belt and/or employing a low-elasticity cord to put priority on the traction performance as mentioned above. On the other hand, since the central region 3B of the tread which is used at a high speed is subjected to a large centrifugal force, it is effective to employ a spiral member having a high modulus of elasticity to prevent expansion due to the centrifugal force. Employment of a member having a high modulus of elasticity for the spiral belt of the central region 3B allows reduction of expansion of the tread portion of the tire due to the centrifugal force, thereby enhancing durability and steering stability at a high speed. The width of the area of the tread central region 3B contacting the ground is 0.2 to 0.25 times as large as the full width of the tread when the vehicle drives at a high speed standing almost upright, and a sufficient effect to reduce the expansion due to the centrifugal force can be expected by existence of a high-elasticity spiral belt having a half width of this area contacting the ground. Therefore, the width of the central region 3B is preferably not less than 0.1 times as large as the full width of the tread. On the other hand, the reason why the upper limit was set to 0.25 is that, if the width of the spiral belt having high-elasticity is too large, hardness of the tire increases, leading to loss of the straight-ahead stability. Further, it is also for ensuring the width of the low-elasticity spiral belt cord in the region 3A at the both edges when the width of the spiral belt is smallest, that is, 0.5 times as large as the full width of the tread. In the present invention, there may be a gap between the two kinds of spiral belts, or the spiral belts may be overlapping with each other.

Fig. 2 shows another preferred example of the pneumatic tire for motorcycles of the present invention. As shown in the figure, in the present invention, a belt intersecting layer 4 is preferably arranged adjacent to the spiral belt layer 3, which belt intersecting layer 4 is wider than the spiral belt layer 3 and has an angle of not less than 30° and less than 85° with respect to the circumferential direction of the tire. This is because, if the belt intersecting layer does not exist in the shoulder portions at the both edge portions where the spiral belt is not wound, the shearing rigidity of the belt is low and the belt is too weak, leading to decrease in the grip ability during turning.

The reason why the angle of the belt intersecting layer 4 arranged in the tread shoulder portions is set to not less than 30° and less than 85° is as follows. If the angle with respect to the equatorial direction is less than 30°, it results in a direction close to that of the spiral belt layer 3, so that the belt characteristically hardly extends in the circumferential direction (equatorial direction) of the tire. This is against the object of the present invention wherein the belt in the shoulder portions is allowed to extend in the equatorial direction in the area contacting the ground. If the angle of the belt is less than 30°, the skeletal member hardly extends in the equatorial direction in the shoulder portions and the velocity of the belt in the shoulder portions does not increase, leaving the tread in the shoulder portion to be in the breaking deformation, so that traction grip can be hardly obtained. On the other hand, if the angle of the belt in the shoulder portions is larger than 85°, a sufficient intersecting effect (an effect to enhance the shearing rigidity of belts yielded by laminating the belts in the opposite directions with each other) as the belt intersecting layer cannot be obtained and hence the rigidity of the belt in the shoulder portions is insufficient, so that a sufficient turning grip cannot be obtained. The angle is preferably not less than 45° at which the skeletal member easily extends in the equatorial direction. Further, it is preferably not more than 80° in view of exertion of the shearing rigidity. Thus, it is preferably not less than 45° and not more than 80°.

As the material for the belt intersecting layer 4, an organic fiber cord is used. This is because, if a cord having rigidity also in the direction of compression of the cord, such as a steel cord is arranged as the belt intersecting layer, the skeletal member characteristically hardly bends in the out-of-plane direction, and the area contacting the ground is small, so that the grip ability decreases. An organic fiber cord does not have a high rigidity in terms of compression in the direction of the cord, so that the rigidity of the skeletal member in the out-of-plane direction can be reduced to secure a large area contacting the ground, and in addition, an organic fiber cord has a high rigidity in the direction of pulling of the cord, which allows effective enhancement of the shearing rigidity. As the organic fiber cord used for the belt intersecting layer 4, the same organic fiber cord as the one used for the spiral belt layer 3 can be used.

In the present invention, the belt intersecting layer 4 may be either arranged in the outside of the spiral belt layer 3 in the radial direction of the tire as shown in Fig. 2 or arranged in the inside of the spiral belt layer in the radial direction of the tire (not shown). The order of arrangement of these layers is not restricted as long as the belt intersecting layer 4 is arranged adjacent to the spiral belt layer 3.

Further, in the present invention, as shown in Fig.1, a belt reinforcement layer 5 comprising an organic fiber cord having an angle of 85° to 90° with respect to the circumferential direction of the tire is preferably arranged between the tread layer 11 and the spiral belt layer 3 such that the belt reinforcement layer 5 is adjacent to the tread layer 11. Even in cases where the type of the cord of the spiral belt is different between the central region 3B and the region 3A at the both edges, the rigidity step still exists at the border between the portion where the spiral belt is present and the portion where the spiral belt is absent. To further reduce the step, a belt reinforcement layer 5 which continues from the tire center to the tire shoulders is provided as the belt to be arranged adjacent to the tread layer 11 as the outermost layer. By this, the step can be made to be hardly felt.

The reason why the angle of the belt reinforcement layer 5 was set to 90° with respect to the equatorial direction of the tire is that, by arranging the cord along the transverse direction, the step can be effectively made to be hardly felt. Here, the reason why the angle ranges between 85° to 90° is that a manufacturing error may be included therein. Further, the arrangement width of the belt reinforcement layer 5 is set to not less than 90% and not more than 110% with respect to the full width of the tread. The purpose of this member is to make the step to be hardly felt, that is, to make the belt in the outermost layer to be hardly segmented, by covering the edge portion of the spiral belt with the member. Therefore, preferably, it has a large arrangement width and is arranged such that the entire area of the tread is covered therewith. If the arrangement width is not less than 90% with respect to the full width of the tread, the step of the spiral belt can be sufficiently covered. In terms of the upper limit, the arrangement width may exceed the tread width, and hence the belt reinforcement layer 5 may reach the side portions. However, in cases where the arrangement width is larger than 110%, the belt exists also in the side portions of the tire at 90°, so that the side may be hardly bent and the tire may be hard (that is, since the tire is hardly bent, the ride quality performance may be worse). Therefore, the upper limit was set to 110%.

The reason why the material of this belt reinforcement layer 5 is an organic fiber is that the cross section of a tire for motorcycles is highly circular, so that in cases where a steel which has rigidity in the direction of compression of the cord in the transverse direction of the tire is employed, the tire is hardly bent, leading to a reduced area contacting the ground. Since an organic fiber has low rigidity in the direction of compression of the cord, the area contacting the ground does not decrease.

Since the reason why the belt reinforcement layer 5 is provided is to eliminate the step in the edge portions of the spiral belt, the diameter of the cord should not be too small. Further, in cases where the diameter of the cord is too large, even an organic fiber has rigidity in the direction of compression of the cord, so that a cord which is too thick is also not preferred. Therefore, the diameter of the cord for the belt reinforcement layer 5 is preferably not less than 0.5 mm and not more than 1.2 mm.

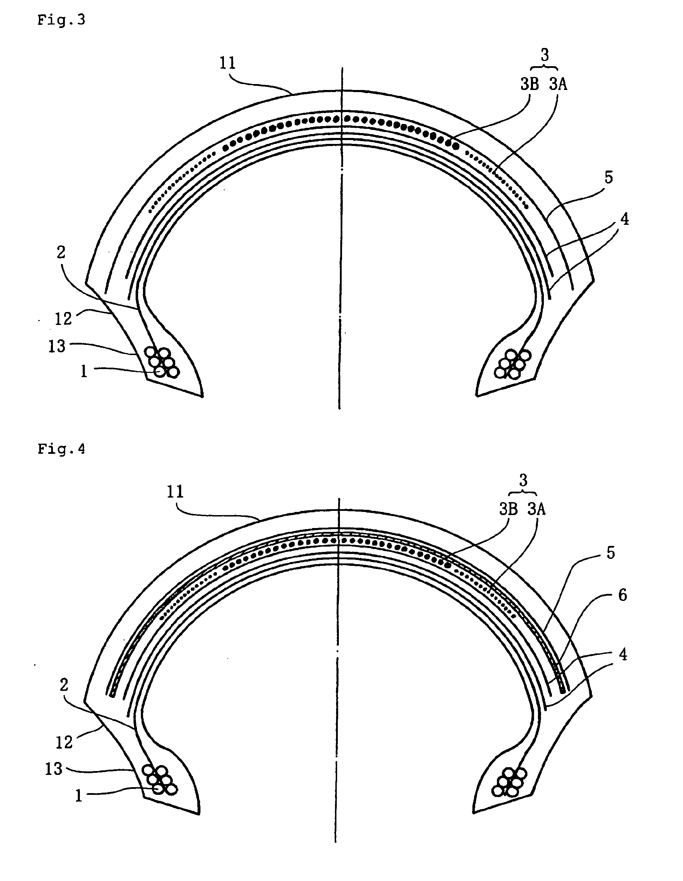

Here, as mentioned above, the belt intersecting layer 4 may be provided either inside or outside the spiral belt layer 3, so that in terms of the order of arrangement of these layers with the belt reinforcement layer 5, in cases where the belt intersecting layers 4 exists inside the spiral belt layer 3, the belt reinforcement layer 5 is placed immediately outside the spiral belt layer 3 (see Fig. 3). On the other hand, in cases where the belt intersecting layers 4 exists outside the spiral belt layer 3, the belt reinforcement layer 5 is placed immediately outside the outer belt out of the two belt intersecting layers 4 (not shown). In either case, it is necessary to arrange the belt reinforcement layer 5 immediately inside the tread portion 11, adjacent to the tread portion 11.

Fig. 4 shows a cross-sectional view of a pneumatic tire for motorcycles according to another preferred example of the present invention. In the present invention, when the belt reinforcement layer 5 is arranged, it is preferred to arrange, as shown in the figure, a shock absorbing rubber layer 6 having a thickness of 0.3 to 1.5 mm inside the belt reinforcement layer 5 in the radial direction of the tire, adjacent to the belt reinforcement layer 5. This shock absorbing rubber layer 6 has an effect to reduce abrasion of the tread in the shoulder portion.

In Fig. 6, motions in the transverse direction of the tread which occur when the tire is turned at a CA of 50° were shown, but on the other hand, deformation in the circumferential direction of the tread is different between the region at the tread edge portions and the region in the tread center portion in the area where the tread is contacting the ground in Fig. 6. This is due to different velocities of the belt in the center-side region in the contact shape and the tread edge-side region in the contact shape. A tire for motorcycles has a large roundness in the cross section in the transverse direction. Thus, the belt radius which is the distance from the rotation axis to the belt is larger in the tread center-side region. Therefore, the velocity of the tire, that is, the velocity of the belt during the process wherein: the tread contacts the ground; the rotation of the tire proceeds; and the tread becomes apart from the road surface; is higher in the tread center-side region. This is because the velocity of the belt is a product of the belt radius and the angular velocity of the rotating tire. Due to the difference in the velocity of the belt in the circumferential direction, the tread in the center side of the tire is in the driving state, while the tread edge-side region of the tire is in the breaking state (as mentioned above).

In the present invention, as mentioned above, by reducing the width of the spiral belt, the belt in the portions where the spiral belt is not wound is allowed to extend in the circumferential direction when it contacts the ground, and the velocity of the belt is enhanced, leading to reduction of ineffective deformations of the tread. However, even in cases where the ineffective deformations are reduced by reducing the width of the spiral belt, the ineffective deformations cannot be completely eliminated.

In cases where the shock absorbing rubber layer 6 is provided inside the belt reinforcement layer 5 in the radial direction of the tire, the shock absorbing rubber layer 6 is subjected to shear deformation in the circumferential direction, so that the above-described driving deformation and breaking deformation are taken over from the tread, leading to further reduction of deformations of the tread in the circumferential direction. On the other hand, since the shock absorbing rubber layer 6 has on its upper surface the belt reinforcement layer 5 along the transverse direction of the tire, it is less likely to be subjected to shear deformation in the transverse direction of the tire. Therefore, deformation of the tread in the transverse direction of the tire is not taken over, so that the shear deformation in the transverse direction remains large even by arrangement of the shock absorbing rubber layer 6. That is, the shock absorbing rubber layer 6 takes over only deformation in the circumferential direction of the tire and reduces deformation of the tread in the circumferential direction to further enhance the grip ability, and on the other hand, it does not take over deformation in the transverse direction of the tire and has an effect to keep deformation of the tread in the transverse direction large, thereby keeping a high lateral force. In cases where, as in the present invention, the width of the spiral belt is reduced and such a shock absorbing rubber layer 6 is provided, ineffective deformations of the tread in the circumferential direction of the tire can be further reduced, which is largely effective and very preferred. The belt reinforcement layer 5 and the shock absorbing rubber layer 6 are preferably arranged widely especially over the range of not less than 90% (especially, not more than 110%) with respect of the tread width.

In the tire of the present invention, only the points satisfying the above conditions of the spiral belt layer are important, and by this, the desired effects of the present invention can be obtained. Other conditions including the tire structure, the materials and the like are not restricted.

For example, the carcass 2 constituting the skeleton of the tire of the present invention comprises at least one carcass ply wherein relatively highly elastic textile cords are arrayed in parallel to each other. The number of the carcass ply may be either one or two, and may be three or more. In terms of the method for fixation of the carcass 2, its both edges can be either anchored by being held from the both sides by bead wires 1 as shown in Fig. 1 or anchored by being folded up from inside of the tire to the outside of the tire around the bead cores (not shown). Further, an inner liner is arranged in the innermost layer of the tire (not shown), and a tread pattern is formed as appropriate on the surface of the tread portion 11 (not shown). The present invention is applicable to not only radial tires but also biased tires.

### EXAMPLES

The present invention will be described concretely by way of Examples.

### <Examples 1 to 3>

Pneumatic tires for motorcycles having a tire size of 190/50ZR17 and the cross-sectional structure as shown in Fig. 1 were prepared according to the following conditions. Each test tire was provided with carcasses comprising two carcass plies (body plies) extending toroidally between a pair of bead cores. Here, a nylon fiber was used as the carcass plies. The two carcasses were angled in the radial direction (at an angle of 90° with respect to the equatorial direction). The edges of each carcass ply were anchored by being held by bead wires from the both sides in the bead portions.

A spiral belt layer was arranged outside the carcasses in the radial direction of the tire. The spiral belt layer was, in terms of Example 1, a layer wherein the region at the both edges comprised cords made of twisted nylon and the central region comprised cords made of twisted aromatic polyamide (product name: Kevlar; in the present Example, aromatic polyamide may be hereinafter referred to as "Kevlar"), and in terms of Example 2, a layer wherein the region at the both edges comprised cords made of twisted PEN and the central region comprised cords made of twisted Kevlar. In terms of Example 3, the region at the both edges comprised cords made of twisted Kevlar and the central region comprised cords made of twisted steel. In the nylon and PEN belt portions, cords having a diameter of 0.6 mm were arranged with an end count of 50 cords / 50 mm; in the Kevlar belt portion, cords having a diameter of 0.7 mm were arranged with an end count of 50 cords / 50 mm; and in the steel belt portion, cords produced by twisting single steel cords having a diameter of 0.18 mm in 1×5 type were arranged with an end count of 50 cords / 50 mm. Each of these portions in the spiral belt was manufactured by a method wherein a belt-shaped body (strip) having two cords which were arrayed in parallel and embedded in a covering rubber was wound spirally approximately along the circumferential direction of the tire in the direction of the tire rotation axis.

In each test tire, the full tread width was 240 mm along the tread surface; the width of the spiral belt in the central region of the tread was 50 mm; and the width of the spiral belt in the region at each of the both edges was 60 mm. That is, the total width of the spiral belt was 60 + 50 + 60 = 170 mm. Therefore, the total width of the spiral belt was 0.71 times as large as the full tread width.

Further, a belt reinforcement layer comprising an aromatic polyamide fiber having an angle of 90° with respect to the circumferential direction of the tire was arranged outside the spiral belt layer in the radial direction of the tire. In the belt reinforcement layer, cords which were made of the twisted aromatic polyamide fiber and had a diameter of 0.7 mm were arranged at an angle of 90° with respect to the circumferential direction of the tire with an end count of 50 cords / 50 mm. The arrangement width of the belt reinforcement layer was set to the same with the tread width. A tread layer having a thickness of 7 mm was arranged outside this belt reinforcement layer in the radial direction of the tire, and predetermined grooves were arranged on the surface thereof.

Using the above structure as the basis, the constitution of the tread portion was modified according to the followings to produce the test tires in the respective Conventional Examples, Examples and Comparative Examples.

### <Example 4>

A pneumatic tire for motorcycles having the cross-sectional structure as shown in Fig. 2 was prepared according to the following conditions. A single carcass ply was used and arranged in the radial direction (at an angle of 90° with respect to the equatorial direction). Further, two belt intersecting layers were arranged instead of the belt reinforcement layer, outside the spiral belt layer in the radial direction of the tire. The belt intersecting layers were formed by arranging cords which were made of a twisted aromatic polyamide fiber and had a diameter of 0.5 mm with an end count of 50 cords / 50 mm. The angles of the belt intersecting layers were set to ± 60° with respect to the direction of the tire and hence the layers were made to be intersected with each other. The arrangement width of the belt intersecting layer was 250 mm in terms of the first one (in the inner side) and 230 mm in terms of the second one (in the outer side).

### <Example 5>

A pneumatic tire for motorcycles having the cross-sectional structure as shown in Fig. 3 was prepared according to the following conditions. A single carcass ply was used and arranged in the radial direction (at an angle of 90° with respect to the equatorial direction). Further, two belt intersecting layers which were the same as those in Example 4 were arranged inside the spiral belt layer in the radial direction of the tire. Therefore, in this case, the belt intersecting layers existed immediately outside the carcass, and the spiral belt layer existed further outside the belt intersecting layers. Further, a belt reinforcement layer comprising an aromatic polyamide fiber having an angle of 90° with respect to the circumferential direction of the tire was arranged outside the spiral belt layer in the radial direction of the tire, as in Example 1. A tread existed outside this belt reinforcement layer.

### <Example 6>

A pneumatic tire for motorcycles was prepared in the same manner as in Example 5 except that the belt reinforcement layer was not arranged outside the spiral belt layer in the radial direction of the tire.

### <Example 7>

A pneumatic tire for motorcycles having the cross-sectional structure as shown in Fig. 4 was prepared in the same manner as in Example 5 except that a shock absorbing rubber layer having a thickness of 1.0 mm was arranged inside the belt reinforcement layer in Example 5, adjacent to the belt reinforcement layer. The material of the shock absorbing rubber layer was the same as that of the coating rubber used for the belt reinforcement layer. Further, the arrangement width was also set to 240 mm which was the same as that of the belt reinforcement layer.

### <Examples 8 to 11>

Pneumatic tires for motorcycles were prepared in the same manner as in Example 5 except that the arrangement width of the spiral belt layer was changed as shown in the table below.

### <Conventional Examples>

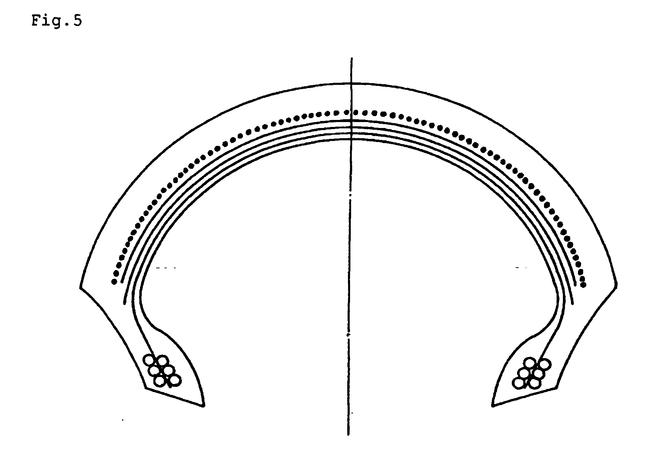

Pneumatic tires for motorcycles having the cross-sectional structure as shown in Fig. 5 were prepared according to the following conditions. In terms of Conventional Example 1, a single carcass ply was used and arranged in the radial direction (at an angle of 90° with respect to the equatorial direction). In terms of Conventional Example 2, two carcass plies were used and arranged in the radial direction (at an angle of 90° with respect to the equatorial direction). In terms of Conventional Example 1, a belt intersecting layer which was the same as in Example 4 was arranged in the outside thereof. Further, a spiral belt layer was prepared with Kevlar (the belt constitution was the same as that of the central region in Example 1).

Further, in terms of Conventional Example 1, a belt reinforcement layer was not arranged, and a belt intersecting layer which was the same as in Example 4 was arranged inside the spiral belt layer in the radial direction of the tire. In terms of Conventional Example 2, neither a belt reinforcement layer nor a belt intersecting layer was arranged.

### <Comparative Example 1>

A pneumatic tire for motorcycles was prepared in the same manner as in Example 5 except that the spiral belt layer was a Kevlar cord layer over the full width.

### <Comparative Example 2>

A pneumatic tire for motorcycles was prepared in the same manner as in Example 1 except that the spiral belt layer was a Kevlar cord layer over the full width.

### <Comparative Example 3>

A pneumatic tire for motorcycles was prepared in the same manner as in Example 5 except that the width of the spiral belt of the aromatic polyamide in the central region of the tread was 30 mm; the width of the spiral belt of the nylon cord layer in the region at each of the both edges was 35 mm; and the total width was 35 + 30 + 35 = 100 mm. Therefore, in this case, the total width of the spiral belt was 0.42 times as large as the full width of the tread.

Each of the obtained test tires was subjected to prescribed tests.

### <Drum Test>

First, enhancement of traction during leaning of the body, which is a primary object of the present invention, was measured using a drum. The method of measurement of traction using a drum is as follows.

In terms of the testing machine, sandpaper was put on a drum having a diameter of 3 m, and the surface of the sandpaper was used as a mimic of the surface of the road. This drum was rolled at a speed of 80 km/h, and a tire was pressed thereon at a CA of 35° and a CA of 50°. Each test tire was inflated to an internal pressure of 240 kPa, and the tire was pressed at a load of 150 kgf. The tire was connected to a chain which transmitted power to the rotation axis, and driving force could be applied therethrough. The driving force was applied using a motor. The tire was allowed to rotate at 80 km/h and driving force was applied to linearly accelerate the tire to 120 km/h for 3 seconds. At this time, since the drum was rolling at 80 km/h, the tire was in a state where driving force was applied thereto, so that traction under a condition where the body was leaned could be measured.

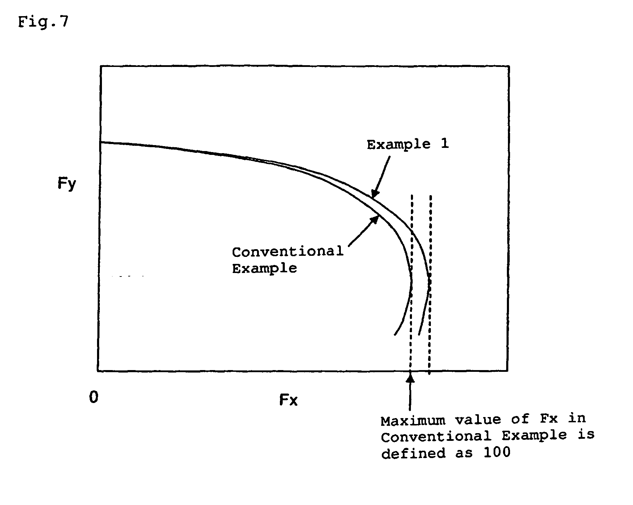

The force acting parallel to the rotation axis of the tire (that is, the transverse direction of the tire) and the force acting vertically with respect to the rotation axis of the tire were respectively measured by a force sensor placed at the wheel center of the tire. Each of these forces was resolved into the force in the transverse direction of the drum and the force in the rotational direction of the drum based on the camber angle, and the force in the transverse direction of the drum was defined as Fy and the force in the rotational direction of the drum was defined as Fx (Fx, Fy are coordinates with respect to the ground). That is, Fy represents the lateral force to turn the motorbike and Fx represents the driving force to accelerate the motorbike, respectively. By taking Fx along the abscissa and Fx along the ordinate, the waveform as shown in Fig. 7 is obtained. This is called a friction ellipse, wherein the intercept of Fy at Fx 0 represents the pure lateral force at a driving force of 0, which is a force called camber thrust. In the present test, the grip performance of a tire in a traction state can be evaluated by acceleration of the rotation of the tire by application of driving force to the tire. In the waveform of the graph, Fx moves in the positive direction with time. The maximum value of Fx can be said to be an index of traction grip.

Defining the maximum value of Fx of the test tire in Conventional Example 1 as 100, the performances in other Examples were evaluated using the index. This was carried out for two standards, that is, a CA of 35° and a CA of 50°. The results are shown in the table below.

### <Driving Test Using Real Motorcycle >

To confirm the performance-improvement effect of the tires for motorcycles of the present invention, a test for comparison of the drivability was carried out using a real motorcycle. The results will be described. Because the test tires were for the rear wheel, only the rear tire was changed in the test using a real motorcycle. As the front tire, a conventional tire was consistently used. The evaluation method will be described as follows.

Each test tire was installed on a 1000 cc sport motorcycle, and the motorcycle was made to travel a test course to comprehensively evaluate steering stability (cornering performance) according to the 10-point scoring system based on feeling of the test rider. On the course, hard driving was carried out in view of motorcycle races, and the maximum velocity reached 180 km/h. Three items, that is, the traction performance at a low-speed corner (acceleration performance from the state where the body was largely leaned at a speed of 50 km/h), traction performance at a high-speed corner (acceleration performance from the state where the body was slightly leaned at a speed of 120 km/h), and grip stability during leaning of the body (sense of discontinuity) were tested.

The state of partial abrasion in the tire shoulder portions was confirmed after driving the test course for 10 laps. The abrasion loss of the tire shoulder portions was measured, and the abrasion loss in each Example was represented as an index, defining the abrasion loss of the tire in Conventional Example 1 as 100. In terms of the abrasion loss, a smaller value indicates a lower extent of abrasion, which is better. The abrasion loss was calculated by measuring the weight of a new tire in advance and comparing it with the weight of the tire after completion of the test. After completion of the test, the abrasion loss was found to have occurred mostly in the shoulder portions, so that the difference in the weight can be said to be due to the difference in the abrasion loss in the shoulder portions. The results are also shown in the table below.

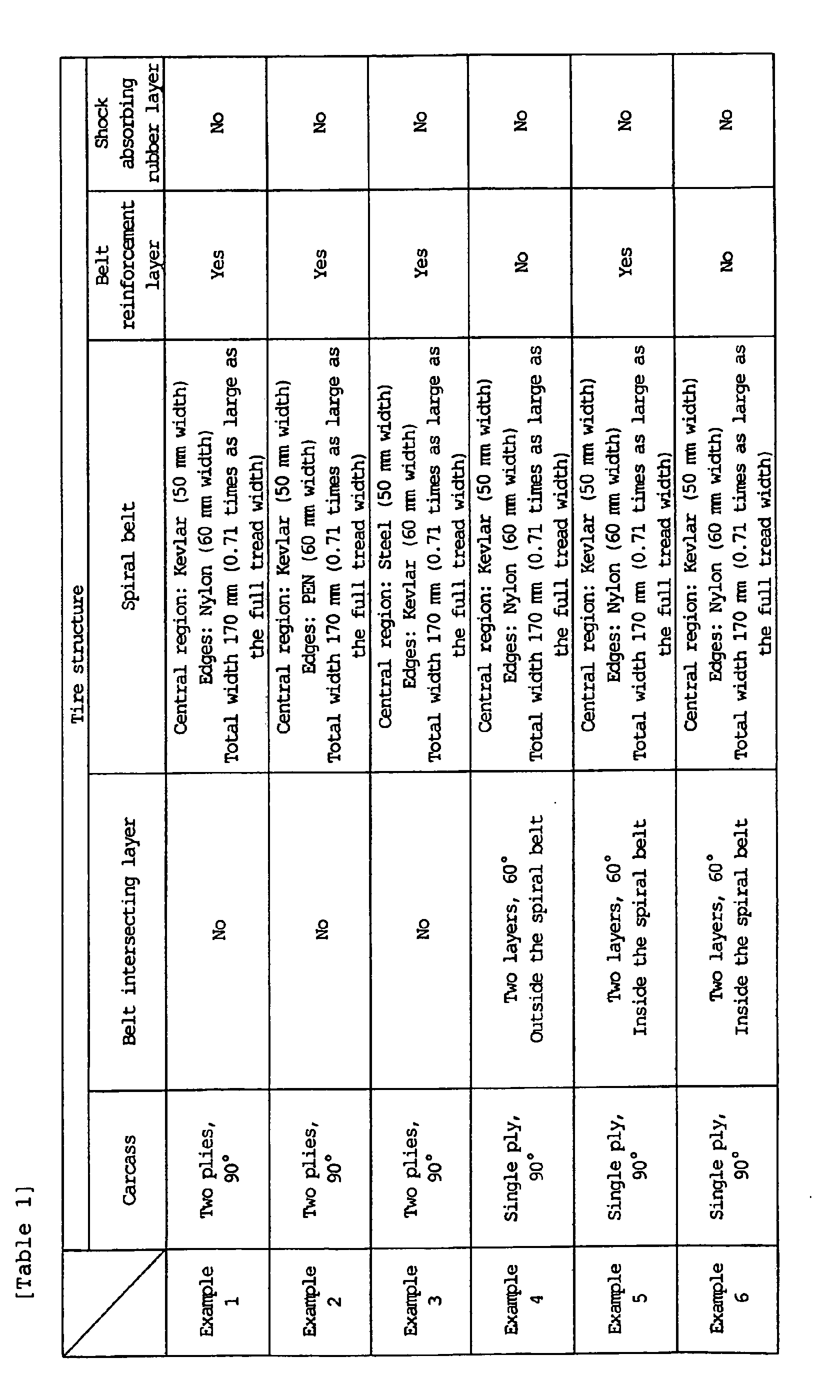

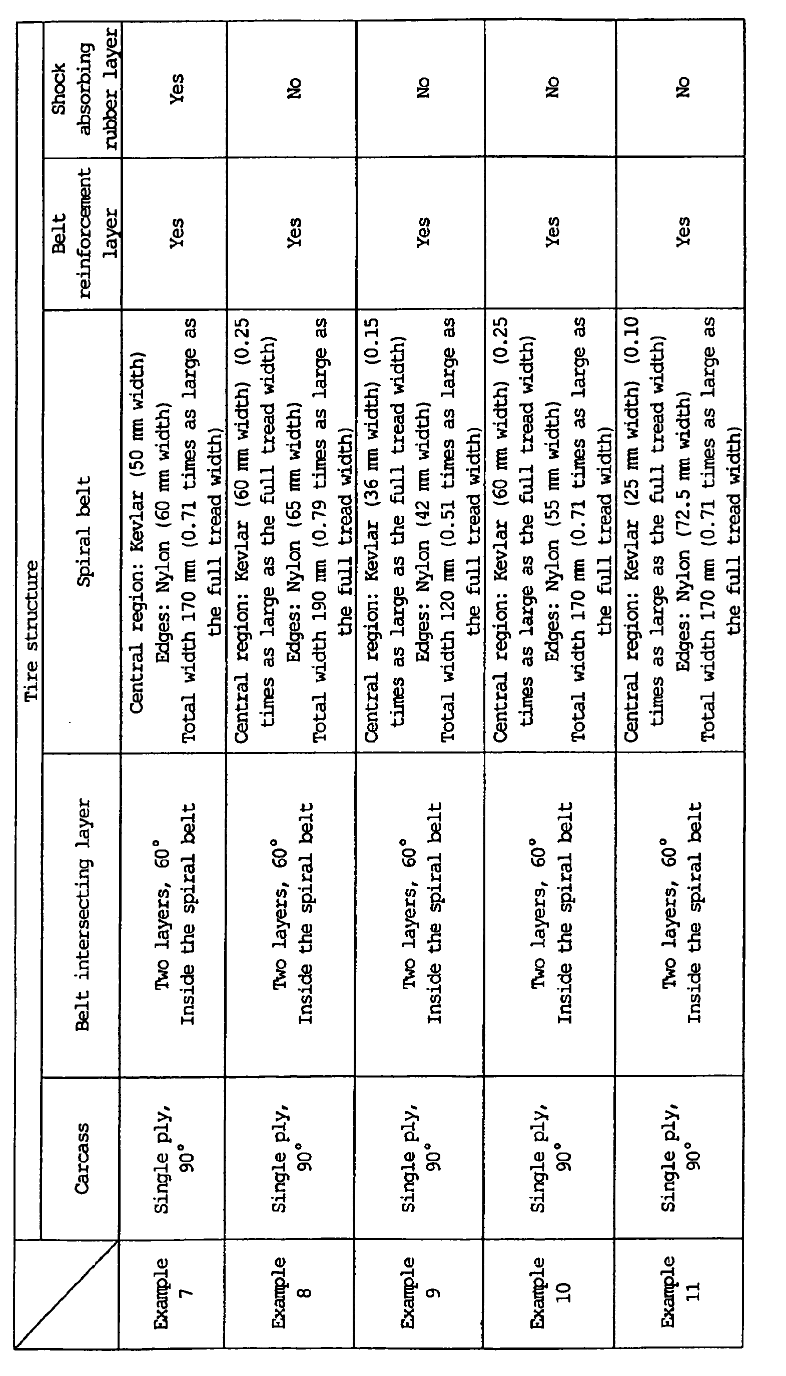

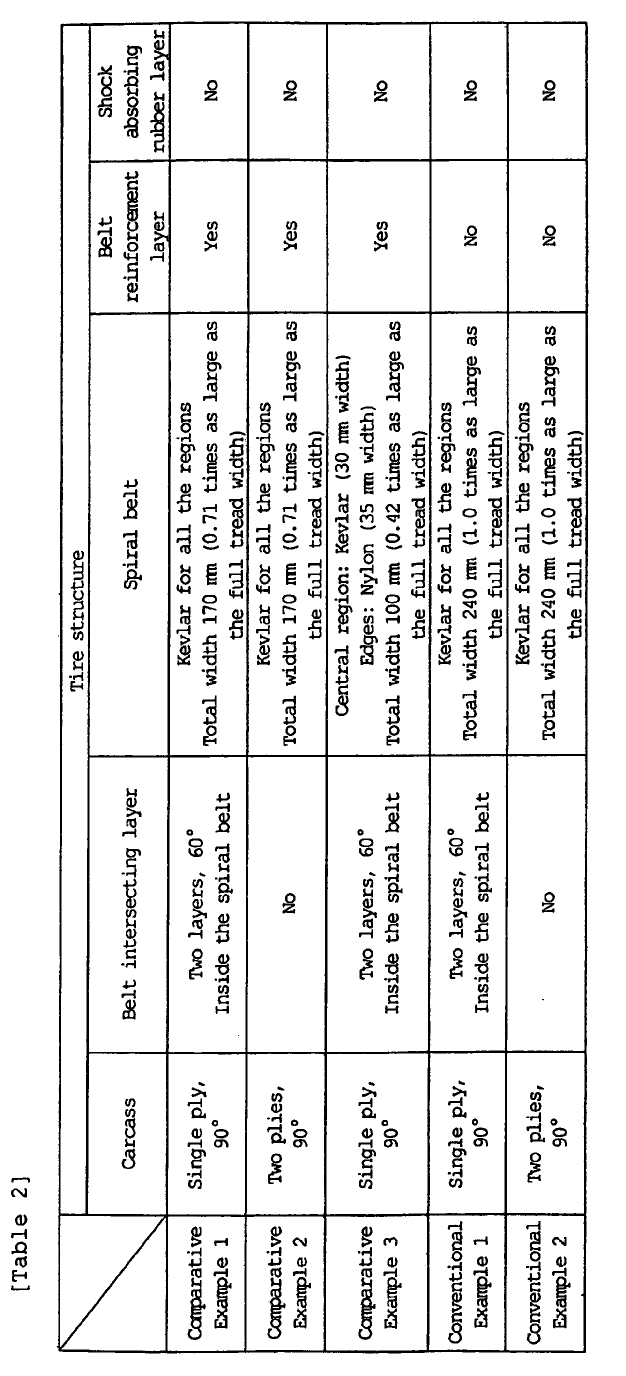

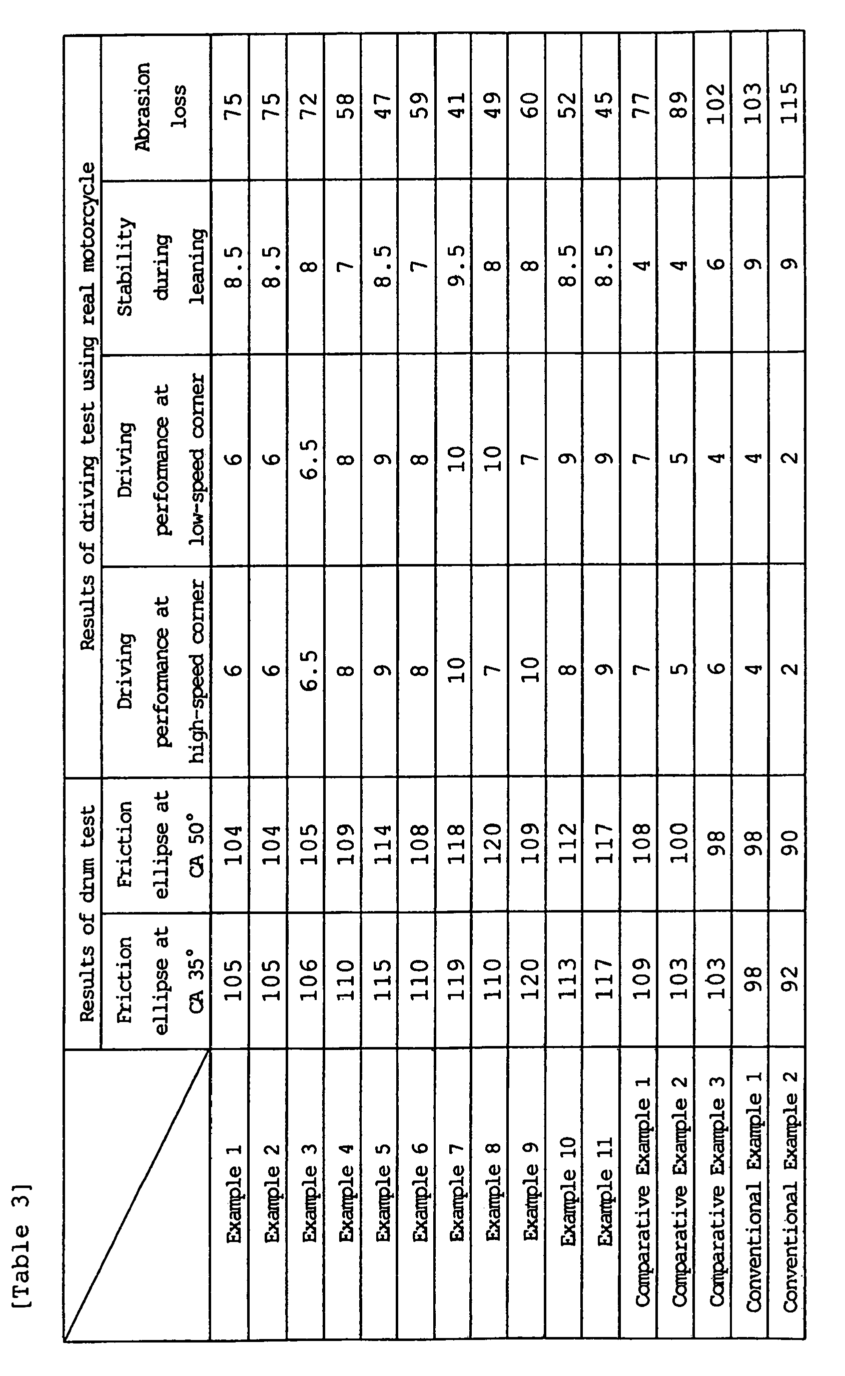

From the above results, the followings were revealed.

It is evident that the present Examples exhibited largely enhanced stabilities during leaning compared to Comparative Examples 1 and 2 wherein the spiral width was reduced using a single member. Further, in Examples 1 to 3, there is no intersecting belt. Therefore, the production cost can be saved. When these Examples 1 to 3 are compared to Comparative Example 2, it can be seen that Examples 1 to 3 wherein a low-elasticity belt member was used at the both edges exhibited largely enhanced stabilities during leaning, and hence that it is important to reduce the rigidity step (the stability was enhanced irrespective of the type of the member used).

Further, in terms of comparison among those having no intersecting belt, Examples 1 to 3 had enhanced Fx indices at a CA of 35° and a CA of 50° compared to Comparative Example 2, and they exhibited better traction performances both at a low-speed corner and at a high-speed corner as well as lower abrasion losses in the test using a real motorcycle.

Examples 4 and 6 show cases where two intersecting belts were provided, and both of these show larger enhancement effects on the traction performance/anti-abrasion properties compared to Conventional Example 1.

By comparison between Example 5 and Example 7, the effect of the shock absorbing rubber layer can be seen. One step higher levels of traction performance and anti-abrasion properties were obtained by the shock absorbing rubber layer.

Further, by comparison among Example 6 and Examples 5 and 7, the effect of the belt reinforcement layer/shock absorbing rubber layer on the stability during leaning can be seen. By adding the belt reinforcement layer and the shock absorbing rubber layer respectively, the rigidity step further decreased and the stability further increased.

From the relationships among Example 5, Example 8 and Example 9, the influence of the arrangement width of the spiral belt layer can be seen. In cases where the width of the spiral belt is large, a better Fx index at a large CA can be obtained, that is, a large effect can be obtained at a low-speed corner where the body is largely leaned at a large CA. However, in the case of the full width as in Conventional Example 1, there is no effect on enhancement of the traction performance. On the other hand, in cases where the width of the spiral belt is small, a large effect can be obtained at a small CA, that is, at a high-speed corner at a CA of about 35°. However, in cases where the width of the spiral belt is too small as in Comparative Example 2, the effect cannot be obtained.

From the relationships among Example 5, Example 10 and Example 11, how the width of the high-elasticity spiral belt and the width of the low-elasticity spiral belt should be balanced can be seen. It was pointed out by riders that, in Examples 9 and 11 wherein the width of the spiral belt in the central region is small, contacting with the ground is unstable when the motorcycle is proceeding straight ahead at a high speed (which is remarkable especially in Example 11), while in Examples 8 and 10 wherein the width of the spiral belt in the central region is large, hardness of the tire is slightly felt when the motorcycle is proceeding straight ahead at a high speed. Thus, in cases where the width of the high-elasticity belt in the central region is larger as in Example 10, the ride quality performance slightly decreases (such a decrease begins at a width of the central region of about 25% with respect to the full tread width). Further, also in cases where the width of the high-elasticity belt in the central region is too small as in Example 11, the ride quality performance decreases (such a decrease begins at a width of the central region of about 10% with respect to the full tread width). From these results, an appropriate width of the central region where the high-elasticity belt is arranged can be said to be 0.1 to 0.25 times as large as the full tread width.

In Example 7, a reinforcement belt layer and a shock absorbing rubber layer were added to the spiral belt of the present invention. The present evaluation gave good results for all of the traction performance, the stability during leaning and the anti-abrasion properties, indicating that enhancement of the performances can be achieved at higher levels compared to Conventional Examples. Further, the stability during leaning of the body was higher than that in Conventional Examples wherein the spiral belt was arranged also in the edges, suggesting effectiveness of combination of the present invention.

From the results above, it was revealed that the present invention enables achievement, at higher levels, of both steering stability (traction performance) during turning by largely leaning the body and stability during leaning of the body.

## Claims

1. A pneumatic tire for motorcycles having a tread portion (11) formed in a circular shape, said tread portion having a crown portion which has a spiral belt layer (3) in its inside in the radial direction of the tire, said spiral belt layer having an angle of 0 to 5° with respect to the circumferential direction of the tire, wherein said spiral belt layer is split into three in the transverse direction and the tensile elastic modulus of the cord constituting the region (3A) at the both edges of said spiral belt layer split into three is lower than that of the cord constituting the central region (3B), **characterized in that** said spiral belt layer (3) has an arrangement width 0.5 to 0.8 times as large as the tread width.

2. The pneumatic tire for motorcycles according to claim 1, wherein the central region of said spiral belt layer has an aromatic polyamide cord layer and the region at the both edges of said spiral belt layer has a nylon cord layer or a polyethylene naphthalate cord layer.

3. The pneumatic tire for motorcycles according to claim 1, wherein the central region of said spiral belt layer has a steel cord layer and the region at the both edges of said spiral belt layer has an organic fiber cord layer.

4. The pneumatic tire for motorcycles according to claim 1, wherein a belt intersecting layer (4) comprising an organic fiber is arranged adjacent to said spiral belt layer, which belt intersecting layer is wider than said spiral belt layer and has an angle of not less than 30° and less than 85° with respect to the circumferential direction of the tire.

5. The pneumatic tire for motorcycles according to claim 1, wherein the width of the region at each of the both edges of said spiral belt layer is 0.10 to 0.25 times as large as the tread width.

6. The pneumatic tire for motorcycles according to claim 1, wherein a belt reinforcement layer (5) comprising an organic fiber cord having an angle of 85° to 90° with respect to the circumferential direction of the tire is arranged between said tread layer and said spiral belt layer such that the belt reinforcement layer is adjacent to said tread layer, in a width of not less than 90% and not more than 110% with respect to the tread width.

7. The pneumatic tire for motorcycles according to claim 6, wherein a shock absorbing rubber layer (6) having a thickness of 0.3 to 1.5 mm is arranged inside of said belt reinforcement layer in the radial direction of the tire such that the shock absorbing rubber layer is adjacent to said belt reinforcement layer.

## Patentansprüche

1. Luftreifen für Motorräder mit einem Laufflächenabschnitt (11), der in einer kreisförmigen Form ausgebildet ist, wobei der Laufflächenabschnitt einen Zenitabschnitt aufweist, der eine spiralförmige Gürtellage (3) in seiner Innenseite in der radialen Richtung des Reifens aufweist, wobei die spiralförmige Gürtellage einen Winkel von 0 bis 5° mit Bezugnahme auf die Umfangsrichtung des Reifens aufweist, wobei die spiralförmige Gürtellage in der Querrichtung dreigeteilt ist und der Zugelastizitätsmodul des Kordes, der den Bereich (3A) an beiden Rändern der dreigeteilten, spiralförmigen Gürtellage bildet, niedriger ist als der des Kordes, der den mittleren Bereich (3B) bildet, **dadurch gekennzeichnet, dass** die spiralförmige Gürtellage (3) eine Anordnungsbreite aufweist, die 0,5- bis 0,8-mal so groß ist wie die Laufflächenbreite.

2. Luftreifen für Motorräder nach Anspruch 1, bei dem der mittlere Bereich der spiralförmigen Gürtellage eine aromatische Polyamidkordlage aufweist und der Bereich an beiden Rändern der spiralförmigen Gürtellage eine Nylonkordlage oder eine Polyethylennaphthalatkordlage aufweist.

3. Luftreifen für Motorräder nach Anspruch 1, bei dem der mittlere Bereich der spiralförmigen Gürtellage eine Stahlkordlage aufweist und der Bereich an beiden Rändern der spiralförmigen Gürtellage eine organische Faserkordlage aufweist.

4. Luftreifen für Motorräder nach Anspruch 1, bei dem eine Gürtelschnittlage (4), die eine organische Faser aufweist, benachbart der spiralförmigen Gürtellage angeordnet ist, wobei die Gürtelschnittlage breiter ist als die spiralförmige Gürtellage und einen Winkel von nicht kleiner als 30° und kleiner als 85° mit Bezugnahme auf die Umfangsrichtung des Reifens aufweist.

5. Luftreifen für Motorräder nach Anspruch 1, bei dem die Breite des Bereiches an jedem der beiden Ränder der spiralförmigen Gürtellage 0,10- bis 0,25-mal so groß ist wie die Laufflächenbreite.

6. Luftreifen für Motorräder nach Anspruch 1, bei dem eine Gürtelverstärkungslage (5), die einen organischen Faserkord aufweist, mit einem Winkel von 85° bis 90° mit Bezugnahme auf die Umfangsrichtung des Reifens zwischen der Laufflächenlage und der spiralförmigen Gürtellage so, dass die Gürtelverstärkungslage der Laufflächenlage benachbart ist, in einer Breite von nicht weniger als 90 % und nicht mehr als 110 % mit Bezugnahme auf die Laufflächenbreite angeordnet ist.

7. Luftreifen für Motorräder nach Anspruch 6, bei dem eine stoßdämpfende Gummilage (6) mit einer Dicke von 0,3 bis 1,5 mm innerhalb der Gürtelverstärkungslage in der radialen Richtung des Reifens so angeordnet ist, dass die stoßdämpfende Gummilage der Gürtelverstärkungslage benachbart ist.

## Revendications

1. Bandage pneumatique pour motocycles, comportant une partie de bande de roulement (11) de forme circulaire, ladite partie de bande de roulement comportant une partie de sommet comportant une couche de ceinture en spirale (3) dans sa partie interne, dans la direction radiale du bandage pneumatique, ladite couche de ceinture en spirale formant un angle de 0 à 5° par rapport à la direction circonférentielle du bandage pneumatique, ladite couche de ceinture en spirale étant divisée en trois dans la direction transversale, le module d'élasticité en traction du câblé constituant la région (3A) au niveau des deux bords de ladite couche de ceinture en spirale divisée en trois étant inférieur à celui du câblé constituant la région centrale (3B), **caractérisé en ce que** ladite couche de ceinture en spirale (3) a une largeur d'agencement représentant 0,5 à 0,8 fois la largeur de la bande de roulement.

2. Bandage pneumatique pour motocycles selon la revendication 1, dans lequel la région centrale de ladite couche de ceinture en spirale comporte une couche de câblés de polyamide aromatique, la région au niveau des deux bords de ladite couche de ceinture en spirale comportant une couche de câblés de nylon ou une couche de câblés de naphthalate de polyéthylène.

3. Bandage pneumatique pour motocycles selon la revendication 1, dans lequel la région centrale de ladite couche de ceinture en spirale comporte une couche de câblés en acier, la région au niveau des deux bords de ladite couche de ceinture en spirale comportant une couche de câblés de fibres organiques.

4. Bandage pneumatique pour motocycles selon la revendication 1, dans lequel une couche coupant la ceinture (4), comprenant une fibre organique, est agencée près de ladite couche de ceinture en spirale, la couche coupant la ceinture étant plus large que ladite couche de ceinture en spirale et formant un angle non inférieur à 30° et inférieur à 85° par rapport à la direction circonférentielle du bandage pneumatique.

5. Bandage pneumatique pour motocycles selon la revendication 1, dans lequel la largeur de la région au niveau de chacun des deux bords de ladite couche de ceinture en spirale représente 0,10 à 0,25 fois la largeur de la bande de roulement.

6. Bandage pneumatique pour motocycles selon la revendication 1, dans lequel une couche de renforcement de la ceinture (5), comprenant un câblé de fibres organiques formant un angle de 85° à 90° par rapport à la direction circonférentielle du bandage pneumatique, est agencée entre ladite couche de bande de roulement et ladite couche de ceinture en spirale, de sorte que la couche de renforcement de la ceinture est adjacente à ladite couche de bande de roulement, sa largeur ne représentant pas moins de 90% et pas plus de 110% de la largeur de la bande de roulement.

7. Bandage pneumatique pour motocycles selon la revendication 6, dans lequel une couche de gomme d'amortissement (6), ayant une épaisseur comprise ente 0,3 et 1,5 mm, est agencée à l'intérieur de ladite couche de renforcement de la ceinture, dans la direction radiale du bandage pneumatique, de sorte que la couche de gomme d'amortissement est adjacente à ladite couche de renforcement de la ceinture.
